(19) Europäisches Patentamt
European Patent Office
Office européen des brevets

(11) **EP 4 773 062 A1**

(12) **EUROPEAN PATENT APPLICATION**

(43) Date of publication:
08.07.2026 Bulletin 2026/28

(21) Application number: 25225998.1

(22) Date of filing: 19.12.2025

(51) International Patent Classification (IPC):
*G06Q 20/40* (2012.01)

(52) Cooperative Patent Classification (CPC):
G06Q 20/4016; G06N 3/045; G06N 3/08;
G06N 3/084; G06N 3/09; G06N 5/01; G06N 5/022;
G06N 5/025; G06N 7/01; G06N 20/00; G06N 20/20;
G06Q 20/405

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.12.2024 US 202419006535

(71) Applicant: Microsoft Technology Licensing, LLC
Redmond, WA 98052 (US)

(72) Inventors:
• SUBRAETI, Anudeep
Redmond, 98052 (US)

• MOHAMED YOONUS, Abdur Raheem Basith
Redmond, 98052 (US)
• ZHONG, Zimin
Redmond, 98052 (US)
• PRINCE-PALMER, Anna R.
Redmond, 98052 (US)
• MURALIDHARAN, Vishnu
Redmond, 98052 (US)
• KUMAR, Akhil
Redmond, 98052 (US)

(74) Representative: CMS Cameron McKenna Nabarro
Olswang LLP
Cannon Place
78 Cannon Street
London EC4N 6AF (GB)

(54) **TECHNIQUES FOR DETECTING EMERGING PATTERNS IN DATA USED FOR MACHINE LEARNING MODEL-BASED DECISIONS**

(57) Described are examples for detecting emerging patterns in data. A detection system for detecting patterns outside of supervised machine learning models is provided for determining similarity scores between transactions to detect the emerging patterns. Transactions in the pattern can be reviewed to determine whether to render decisions on the transactions or similar subsequently occurring transactions. A self-correcting detection system is also provided for using machine learning models to correct for emerging patterns in the transaction data.

Figure 1

## Description

### BACKGROUND

Machine learning (ML) models exist for receiving a set of input data and providing an output based on data used to train the ML to attempt to provide appropriate or desired outputs. Some systems may render decisions regarding input data based on the output from the ML model. ML models can use a supervised learning process where rules or training data used to train the ML models are selected by a person, or team of people, to achieve a desired output based on a given set of inputs. Such static or rigidly trained ML models may fail to detect emerging patterns or signals that are outside of the supervised learning process. For example, in the dynamic and ever-evolving landscape of digital financial transactions, detecting emerging signals and patterns in customer behavior can present significant challenges. In the payments space, for example, these patterns can reflect specific usage methods, variations in how different user segments engage with payment systems, or even the tactics employed by malicious actors that pose threats to products and services. Traditional detection systems using ML models often rely on static rules or predefined patterns, which struggle to keep pace as trends evolve. These legacy paradigms may require considerable human intervention and deep subject matter expertise to adapt to new trends, which can result in delays and extended deployment cycles for updates and enhancements.

In addition, the increasing sophistication and frequency of fraudulent and other suspicious activities can pose significant challenges for businesses operating in the digital realm. Traditional detection systems often fall short in addressing these challenges due to their limited scalability, in that hardware limitations may not allow the systems to scale vertically to effectively detect various types of fraud. Traditional systems may also rely on manual intervention, and/or may be unable to adapt to new patterns in real-time, based on only being trained with data it has been presented as known fraud at a particular point in time. These systems also struggle to integrate diverse data sources and provide the necessary contextual insights for effective decision-making. As a result, businesses may face heightened risks of financial losses, reputational damage, and operational inefficiencies due to the existence of fraud and/or increase in fraud sophistication.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an example, a device for detecting emerging patterns in transaction data is provided that includes one or more memories storing instructions, and one or more processors coupled to the one or more memories. The one or more processors are configured to execute the instructions to generate, from received transaction data, multiple patterns of the transaction data based on feature combination, where each pattern of the transaction data has a same number of common attributes, filter the multiple patterns based on a parameter related to a number of data entries in each pattern to generate a filtered set of patterns, for each pattern in the filtered set of patterns, create a first set of transactions associated with a decision output by a transaction service and a second set of transactions that do not result in the decision, derive a confidence interval of average similarity scores based on a first set of similarity scores between transactions in the first set of transactions, for each transaction in the second set of transactions, determine a third set of transactions having an average similarity score that is above a lower threshold of the confidence interval, and modify at least a portion of the third set of transactions to be associated with the decision.

In another example, a device for detecting emerging patterns in transaction data is provided that includes one or more memories storing instructions, and one or more processors coupled to the one or more memories. The one or more processors are configured to execute the instructions to obtain, for a collection of transaction data including multiple transactions, an embedding associated with each transaction of the multiple transactions, determine, for the transaction data and based on a similarity between the embeddings, neighboring sets of transactions having similar features, separate, based on the neighboring sets of transactions, at least a portion of the transaction data into a training dataset for training a machine learning (ML) model and a validation set for assessing performance of the ML model, correct the ML model at least in part by removing a portion of the multiple transactions from the training dataset, and modify, based on output of the ML model for at least a first portion of transactions in the neighboring sets of transactions, at least a second portion of transactions in the neighboring sets of transactions to be associated with a decision.

In another example, a method for detecting emerging patterns in transaction data is provided that includes generating, from received transaction data, multiple patterns of the transaction data based on feature combination, where each pattern of the transaction data has a same number of common attributes, filtering the multiple patterns based on a parameter related to a number of data entries in each pattern to generate a filtered set of patterns, for each pattern in the filtered set of patterns, creating a first set of transactions associated with a decision output by a transaction service and a second set of transactions that do not result in the decision, deriving a confidence interval of average similarity scores based on a first set of similarity scores between transactions in the first set of transactions, for each transaction in the second set of transactions, determining a third set of transactions having an average similarity score that is above a lower threshold of the confidence interval, and modifying at least a portion of the third set of transactions to be associated with the decision.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

## BRIEF DESCRIPTION OF THE DRAWINGS

Figure 1 is a schematic diagram of an example of a device for detecting emerging patterns in input data, in accordance with aspects described herein.

Figure 2 illustrates a data flow of transaction data through a detection system that includes pattern generation and decisioning, in accordance with aspects described herein.

Figure 3 is a flowchart of an example of a method for detecting emerging patterns in data used for machine-learning (ML) model-based decisions, in accordance with aspects described herein.

Figure 4 is a schematic diagram of an example of a device for using one or more ML models for detecting emerging patterns in input data, in accordance with aspects described herein.

Figure 5 illustrates a data flow of transaction data through a self-correcting detection system, in accordance with aspects described herein.

Figure 6 is a flowchart of an example of a method for detecting, using one or more ML models, emerging patterns in data used for ML model-based decisions, in accordance with aspects described herein.

Figure 7 is a schematic diagram of an example of a device for performing functions described herein, in accordance with aspects described herein.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known components are shown in block diagram form in order to avoid obscuring such concepts.

This disclosure describes various examples related to detecting emerging patterns in data that is input into a machine learning (ML) model to obtain a corresponding output, from which a decision regarding the input data is rendered. For example, the emerging patterns include patterns of activity aiming to achieve fraud in performing financial transactions using computing systems, where the emerging patterns may overcome evolving fraud protection schemes implemented in the computing systems. In one example, a dynamic graph-based detection system continuously or periodically (or on-demand) monitors input data, which is input into a ML model to obtain an output for rendering a decision for the input data. The dynamic graph-based detection system generates a graph based on the input data (e.g., with transactions as nodes and edges between nodes having one or more similar parameter values). From the graph, the dynamic graph-based detection system constructs clusters of events based on features of the input data to recognize emerging patterns in the input data. The dynamic graph-based detection system detects similarities between the input data and historical input data (which includes previous transactions) for which a certain decision is rendered based on ML model output. For example, in the case of fraud detection, the decision relates to whether the transaction is determined by the system to be fraud. The dynamic graph-based detection system accordingly adapts the ML model output based on the emerging patterns, and is dynamic in its ability to detect the emerging patterns and/or adapt the ML model output without requiring user intervention. In one example, adapting the ML model output is based on providing a person with information regarding the emerging pattern (e.g., via an interface) and receiving approval from the person to adapt the ML model output for input data that is similar to the emerging pattern.

Existing methods in the field require extensive infrastructure setup, specific model training periods, and periodic model refreshes to stay relevant, while the dynamic graph-based detection system described herein eliminates these constraints by operating without a model, detecting associations between transactions directly and in real-time, which allows for efficient performance and the ability to be responsive to changing data signals, as it quickly captures emerging patterns without the need for costly and time-consuming refresh cycles. In addition, traditional methods often fall short by lacking a clear decision-making process to identify "transactions of interest." Rather, existing methods tend to rely on arbitrary thresholds that must be manually adjusted over time to accommodate data drift and concept drift, which can limit their adaptability and scalability. In contrast, the dynamic graph-based detection system described herein, leverages statistical properties inherent in the data to dynamically detect patterns, ensuring that their detections remain relevant as trends evolve rather than existing methods that employ arbitrary thresholds that require periodic adjustments.

Additionally, the dynamic graph-based detection system described herein allows for significant configurability. In some examples, the dynamic graph-based detection system described herein is used in a variety of domains including payment fraud detection, detecting security breaches, monitoring network traffic, providing insights for business analytics, etc.

In another example, a dynamic self-correcting graph-based detection system, detects emerging patterns and anomalies across diverse domains. For example, the dynamic self-correcting graph-based detection system includes multiple ML models and diverse data sources to transform and enrich complex relational data, which enables efficient identification of unusual patterns and trends in input data, which is input into a ML model to obtain an output from which a decision is rendered for the input data. For example, a ML model of the dynamic self-correcting graph-based detection system is used to compare embeddings generated from the graph nodes representing input data to determine neighbor nodes that have a similarity (e.g., a small difference) from the graph nodes to render decisions for the input data.

The dynamic self-correcting graph-based detection system self-corrects the ML model by removing some transactions from a training dataset based on an influence score matrix, and is dynamic in its ability to do so without requiring user intervention. In one example, dynamic self-correcting graph-based detection system facilitates automated decision-making for high-confidence predictions and/or requests for reviewing decisions yielding low-confidence predictions. The automated decision-making ensures that only events with a high probability of matching specified patterns are automatically acted upon, while facilitating user review for those events with low probability.

The dynamic self-correcting graph-based detection system described herein uses graph personal identification information (PII) representations and similarity features, combined with multiple tiers of self-correcting classifier models, to predict likely decisions (e.g., fraud events or any event as designated by the user for their use-case), by modeling intricate relationships between transactions and detect emerging patterns with high accuracy in real time. In addition, the dynamic self-correcting graph-based detection system described herein has cross-platform extensibility. The dynamic self-correcting graph-based detection system described herein also introduces a fully automated detection process, significantly reducing the need for manual intervention. The system automatically detects emerging patterns and linked events in real-time, offering high-confidence predictions for automated decision-making.

Additionally, the dynamic self-correcting graph-based detection system described herein provides valuable context and annotations for flagged transactions that are under review by users (e.g., subject matter experts), such as insights into how similar a transaction is to a previously known and decided upon (e.g., flagged or safe) transactions, enabling subject matter experts to make informed decisions during the review process. In this example, this comprehensive approach improves the accuracy of pattern detection and streamline the workflow for handling suspicious transactions. The dynamic self-correcting graph-based detection system described herein manages large volumes of data from multiple businesses and identify cross-platform fraud. By integrating data from different sources, the system identifies patterns and trends that may not be apparent when analyzing data from a single business.

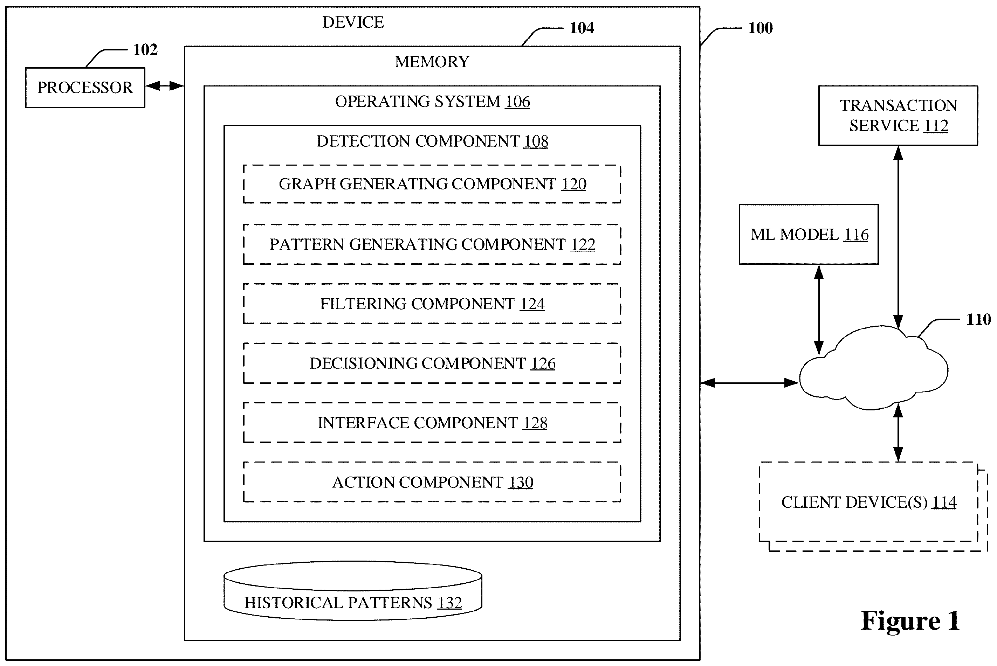

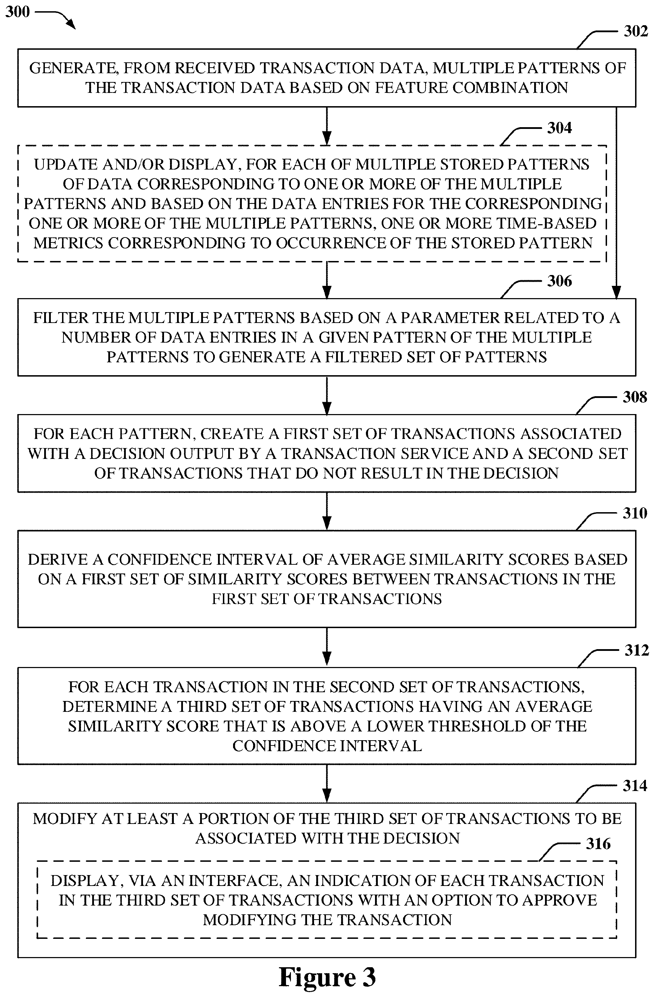

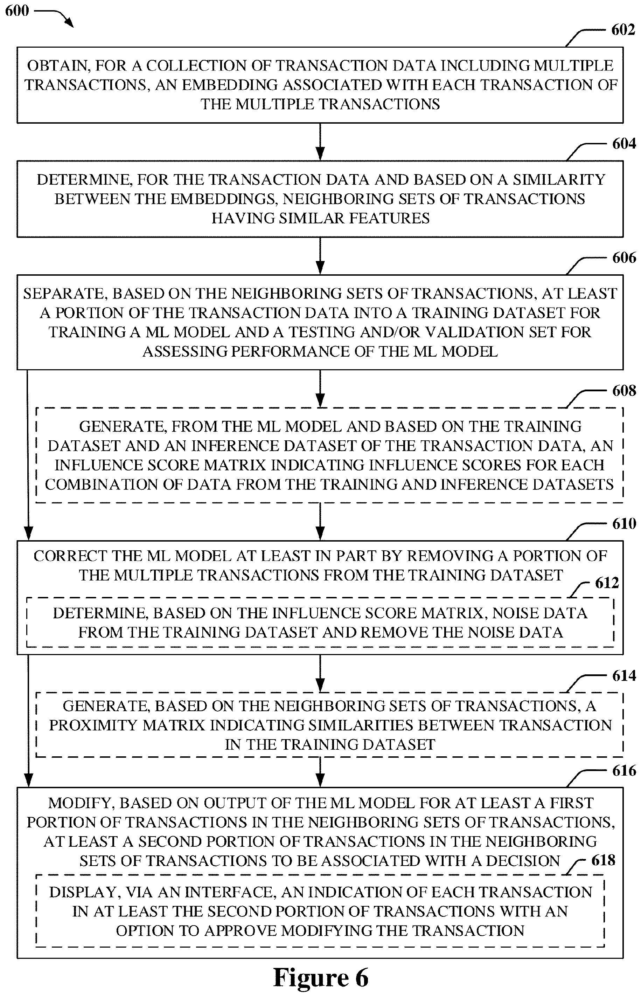

Turning now to Figures 1-7, examples are depicted with reference to one or more components and one or more methods that may perform the actions or operations described herein, where components and/or actions or operations in dashed line may be optional. Although the operations described below in Figures 3 and 6 are presented in a particular order and/or as being performed by an example component, the ordering of the actions and the components performing the actions may be varied, in some examples, depending on the implementation. Moreover, in some examples, one or more of the actions, functions, and/or described components may be performed by a specially programmed processor, a processor executing specially-programmed software or computer-readable media, or by any other combination of a hardware component and/or a software component capable of performing the described actions or functions.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processors may in combination execute the respective subset of instruction to accomplish performing actions X, Y, and Z. Alternatively, a single processor may execute the instructions stored on a single memory, or distributed across multiple memories, to accomplish performing actions X, Y, and Z.

Figure 1 is a schematic diagram of an example of a device 100 (e.g., a computing device) for detecting emerging patterns in input data, in accordance with aspects described herein. In an example, device 100 provides functionality of a dynamic graph-based detection system, as described herein. Device 100 includes one or more processors 102 and/or a memory/memories 104 configured to execute or store instructions or other parameters related to providing an operating system 106, which executes one or more applications or processes. For example, processor(s) 102 and memory/memories 104 are separate components communicatively coupled by a bus (e.g., on a motherboard or other portion of a computing device, on an integrated circuit, such as a system on a chip (SoC), etc.), components integrated within one another (e.g., processor(s) 102 includes the memory/memories 104 as an on-board component), and/or the like. Memory/memories 104 store instructions, parameters, data structures, etc. for use or execution by processor(s) 102 to perform functions described herein. In another example, processor(s) 102 and/or memory/memories 104 are distributed over multiple devices or physical computing nodes in a network (e.g., in a cloud-based computing platform) for providing the functions of the various components described herein.

The operating system 106 executes one or more applications or processes, such as, but not limited to, a detection component 108 for detecting emerging trends in input data. In an example, device 100 communicates with various other devices via one or more networks 110 (e.g., the Internet and/or one or more network nodes that formulate or communicates with the Internet or another network). In an example, a transaction service 112 is provided, which communicates with various client devices 114, via the one or more networks 110, for providing a transaction thereto. The transaction service 112 renders a decision regarding a transaction for the client device(s) 114 based on providing input data received from the client device(s) 114 to a ML model 116, with which the transaction service 112 communicates via the one or more networks 110. In one specific example, client device(s) 114 provide input data including PII to the transaction service 112 for requesting a transaction, such as to purchase a service or product, create an account, etc. with the transaction service 112. In this example, the transaction service 112 provides the input data to a ML model 116 to receive an output of a risk score associated with the transaction, from which the transaction service 112 renders a decision of whether to accept the transaction or reject the transaction as fraudulent.

In accordance with aspects described herein, detection component 108 detects emerging patterns in the input data that is provided to transaction service 112. For example, detection component 108 optionally includes a graph generating component 120 for generating a graph based on transaction data received from transaction service 112, where the graph has nodes representing each transaction in the transaction data and edges representing common features between transactions (e.g., features of the transaction having the same value). The graph may be a directed graph, an undirected graph, and/or the like. Features can also be referred to as attributes or parameters of the transaction data, which, in some examples, include a name and value pair in the transaction. In an example, the features for connecting the nodes are defined using an interface to associate transactions by desired parameters. Detection component 108 optionally includes a pattern generating component 122 for generating sets of transactions that correspond to one or more patterns, where the one or more patterns are defined by a combination of features or attributes of the transactions that are common among the transactions (e.g., PII data, IP address, etc.).

Detection component 108 optionally includes a filtering component 124 for filtering the patterned sets of transactions based on one or more conditions of the transactions in a given pattern. Detection component 108 optionally includes a decisioning component 126 for rendering a decision for the filtered patterned sets of transactions, or transactions in the sets, based on a similarity between the transactions. Detection component 108 optionally includes an interface component 128 for providing information regarding detected similarities among transactions, and/or an action component 130 for rendering a decision for a transaction based on the similarities or based on input received from the interface component 128. In an example, memory/memories 104 store historical patterns 132 (e.g., in a database or other data store) for displaying metrics of the historical patterns 132, using historical patterns to render decisions on more recently received transaction data, and/or the like. The historical patterns 132 include patterns detected by the detection component 108 during prior execution thereof, which include an identifier for the pattern and/or one or more parameter values that are common among transactions in the pattern.

In an example, the components 108, 120, 122, 124, 126, 128, and/or 130, and/or historical patterns 132 data store, are included in, or implemented by, the device 100 and/or in other devices (e.g., in a cloud-computing environment or cloud-based computing platform), but are described herein as provided by the device 100 for ease of explanation. Indeed, in some examples, device 100 is provided by multiple devices or nodes of a cloud-based computing platform. In addition, though shown as separate components or devices, any of device 100, transaction service 112, client devices 114, ML model 116, etc. can be implemented in a same device or across multiple devices or nodes. For example, device 100 provides one or more of components 108, 120, 122, 124, 126, 128, and/or 130, and/or historical patterns 132 data store, and also the transaction service 112.

In an example, detection component 108 receives transaction data from various sources, which, in some examples, includes real-time transactions or a list of recent transactions from transaction service 112, a list of historical transactions from transaction service 112, a list of historical transactions stored in historical patterns 132 data store, and/or the like. In an example, graph generating component 120 generates the graph of the obtained transaction data, which include nodes representing the transactions and edges representing an association between transactions, such as a common feature combination (e.g., same values for a set of features). In one example, the transaction data includes PII or other data that is hashed, and the graph generating component 120 uses the hashed values to determine whether features between the transactions have a common value. In an example, pattern generating component 122 generates patterned sets of transactions based on the graph by determining nodes connected by a certain (e.g., configurable) number of edges (e.g., nodes that have a certain number of common features, which indicates a pattern). Detection component 108 evaluates the patterned sets of transactions, determine metrics for each pattern, and/or output the patterned sets of transactions and/or associated metrics to the historical patterns 132 data store. Storing the patterned set of transactions to the historical pattern 132 data store facilitates quick retrieval of already determined patterns and/or associated metrics for subsequent detections, and/or allows for presenting the metrics via an interface (e.g., displayed by interface component 128). In an example, a user can view and use the interface to view and/or investigate emerging patterns.

In an example, filtering component 124 filters the patterned sets of transactions, as generated by the pattern generating component 122, according to filtering criteria, which include properties of the data in the sets (or comparing values of the properties to one or more thresholds) to validate the patterned sets of transactions. In an example, the properties include a number of transactions (e.g., a transaction volume) in the sets, a volume of growth in the number of transactions over a period of time (e.g., an amount by which the number of transactions increased between two points in time), etc. In this example, decisioning component 126 analyzes one or more transactions in a given patterned set of transactions to determine whether to render a decision for the one or more transactions based on a similarity score to other transactions in the patterned set. For example, decisioning component 126 separates the patterned set of transactions into a group of "transactions of knowledge" (e.g., transactions known to result in a definitive decision by the ML model 116) and "transactions of interest" (e.g., the remaining transactions or transactions otherwise not known to result in the decision).

In an example, decisioning component 126 separates the patterned set of transactions into the groups of transactions based on one or more values of one or more features. In this example, decisioning component 126 renders a decision for one or more of the transactions of interest based comparing a similarity score of a transaction of interest to that of the transactions of knowledge to detect whether the average is above a lower threshold of a confidence interval. If so, action component 130 renders the decision for the transaction of interest. As part of rendering the decision, in one example, interface component 128 displays an interface with the transaction to allow a person to approve rendering of the decision for the transaction. In one example, action component 130 renders the decision, which, in one example, includes signaling the transaction and rendered decision information to the ML model 116. Modifying the transaction to be associated with the decision, in this regard, causes the ML model 116 to be trained with the transaction and associated decision, and thus affect subsequent decisions rendered by the ML model 116, and/or the transaction service 112.

In one example, the detection component 108 evaluates shared values of various attributes across all the transactions and groups the transactions based on their shared values. The set of shared values are referred to as a pattern, as described. In one example, detection component 108 stores the data without actually building a graph. In an example, all transactions having these specific values across a number of attributes are considered as belonging a same pattern. By capturing these patterns (or "linkages") and their associated transactions, in some examples, detection component 108 may not explicitly build a graph, but captures the information as a graph would capture for subsequent analysis (e.g., captures the linkages between transactions that a graph would capture as an edge between nodes representing the transactions). The historical patterns 132 data store stores a set of metrics for each of these patterns, such as the number of transactions seen in the pattern, number of successful transactions, number of blocked transactions etc., which, in an example, are presented to a user via an interface provided by interface component 128. Using these insights can facilitate arriving at a data-driven decision about any new incoming transaction for which a decision such as a cohort grouping, fraud or nonfraud decision, etc. has not been made by the transaction service 112. The decisioning component 126, as described herein, helps to identify potential transactions of interest for further action.

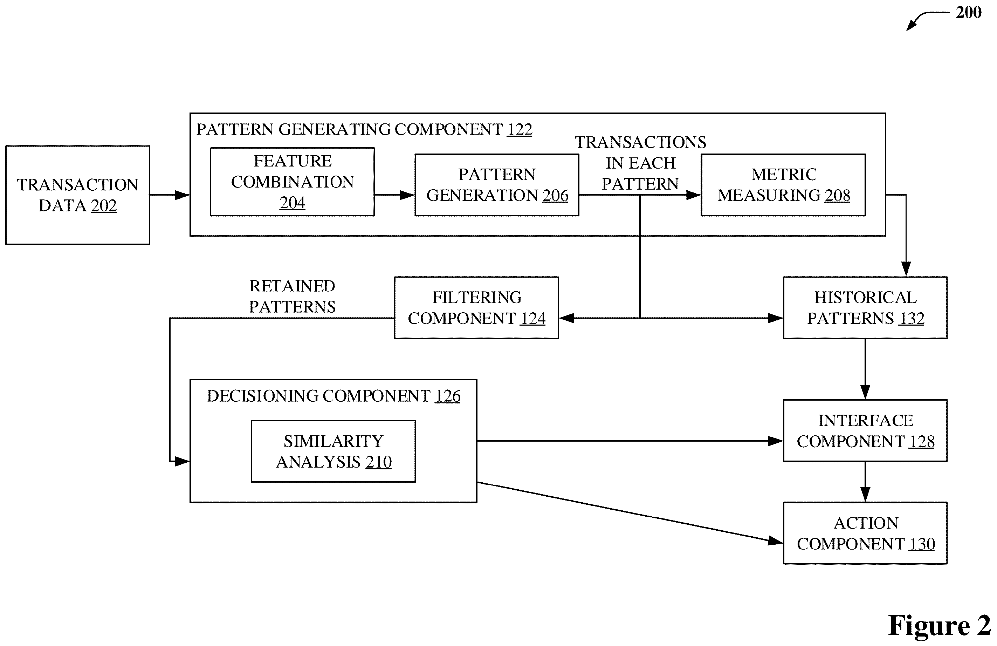

Figure 2 illustrates a data flow 200 of transaction data 202 through a detection system that includes pattern generation and decisioning, in accordance with aspects described herein. One or more components 108, 120, 122, 124, 126, 128, and/or 130 described in Figure 1 can provide one or more of the functions described in reference to Figure 2.

For example, transaction data 202 is received from a transaction service 112 and/or from a historical patterns 132 data store for evaluation to determine similarity between transactions and render decisions on at least some of the transactions. In an example, the transaction data 202 includes raw transaction data with PII obtained and collated from various data sources. In an example, a time period is specified for the transaction data 202 to be obtained (e.g., a number of days). In this regard, in an example, a user configures, e.g., via an interface provided by interface component 128, a lookback window of transactions to be analyzed. The transaction data 202 is provided to pattern generating component 122.

In an example, pattern generating component 122 includes a feature combination 204 function for specifying feature combinations based on which a pattern generation 206 function combines transactions, where the features include attributes or parameters (e.g., name and value pairs) in each data entry (e.g., each transaction) of the transaction data. In one example, the features in feature combination 204 include the attributes on which patterns are intended to be located and/or a size of each pattern (e.g., a number of attributes in the pattern). In an example, the size of the pattern is flexible, and thus may be configured in, or configurable by, the pattern generating component 122. In an example, a user configures, e.g., via an interface provided by the interface component 128, the feature combination (e.g., the set of attributes on which the user intends for the pattern generation 206 function to find patterns) and/or number of attributes in a feature combination (e.g., whether to find patterns with 3 attributes, 4 attributes, etc., taken together). Pattern generation 206 function identifies the feature combinations through an exhaustive, combinatorial algorithm. As an example, if the user specifies 25 attributes on which to find patterns and the size of the pattern as 4 attributes at a time, $^{25}C_4$ = 12,650 attribute combinations are possible. In some examples, the patterns are dynamically formed depending on the transaction data (e.g., even though a user can specify the size of the pattern, the patterns themselves are automatically mined from the data, which facilitates capturing transient patterns and/or emerging ones).

In an example, pattern generation 206 iterates through each of the attribute combinations defined by the feature combination 204 and determines all of the possible patterns for each combination. Pattern generation 206 also obtains the list of transactions belonging to each pattern in each attribute combination and provides the lists to a metric measuring 208 function and/or filtering component 124. Metric measuring 208 function measures metrics of transactions in each list of transactions, which correspond to a pattern, to allow for identifying one or more patterns as an emerging pattern. Metric measuring 208 function obtains metrics from the historical patterns 132 data store, which stores historical metrics of the patterns (e.g., the feature combinations) associated with each list of transactions. Metric measuring 208 function, for each list of transactions, measures metrics list of transactions and update the metrics stored in the historical patterns 132 for the pattern corresponding to the list of transactions. In one example, a user specifies, e.g., via an interface provided by interface component 128, the metrics to attach to each pattern, which are the metrics stored in the historical patterns 132 data store and updated as part of the metric measuring 208 function. Examples of such metrics include a number of days the pattern has been historically seen (e.g., determined by pattern generation 206 to have some transactions associated with the pattern), the first date the pattern was seen, the last date the pattern was seen, pattern growth in transaction volume over a period of time, etc. As each pattern is unique, pattern generation 206 assigns a unique identifier to each pattern, and the metric measuring 208 function periodically (or based on a request, event, or other trigger) automatically updates the metrics for each pattern in the historical patterns 132 data store.

In one example, interface component 128 provides an interface (e.g., on a display) to show the metrics stored in the historical patterns 132 data store for multiple patterns. For example, the interface identifies the pattern (e.g., based on the identifier, an indication of the common attributes that define the pattern, etc.) along with the metrics (e.g., the number of days the pattern is seen, the first date the pattern was seen, the last date the pattern was seen, the pattern size (e.g., number of transactions detected for the pattern) at one or more time periods, etc.). In an example, the interface allows for specifying a date range, a pattern persistence (e.g., number of days), pattern size, etc., and queries the historical patterns 132 data store for the associated metrics. In an example, the interface represents the metrics as a list of patterns, a graph showing the patterns and pattern size on a timeline, etc., which allows a user to visually identify emerging patterns in the transaction data.

In an example, filtering component 124 filters the patterns or the lists of transactions in each pattern. For example, filtering component 124 filters the patterns to determine patterns that satisfy the filtering criteria described herein, such as patterns having a threshold number of transactions that satisfy the pattern, patterns having a threshold volume of growth of number of transactions that satisfy the pattern over a period of time, etc. For example, filtering component 124 filters the patterns based on one or more volume-based parameters, such as a minimum transaction volume, a minimum volume of growth, etc. to retain patterns that have a statistical significance. In one example, a user configures, e.g., via an interface provided by the interface component 128, the parameters for filtering the patterns by filtering component 124. The retained patterns (e.g., the lists of transactions corresponding to the retained patterns) are provided to the decisioning component 126 for decisioning related to one or more of the associated transactions.

In an example, the decisioning component 126 performs a similarity analysis 210 function to determine similarity between transactions in a list of transactions corresponding to a pattern. Patterns may have multiple transactions of interest but only some transactions could be actioned upon (e.g., have a rendered decision). The transactions that are actioned upon are based on the different attributes of the transaction compared to the other transactions in the pattern (e.g., attributes that are not part of the pattern of common attributes). The similarity analysis 210 facilitates rendering a statistically backed decision to act on certain transactions while not on others. For example, the similarity analysis 210 splits the transactions in each pattern into two groups - "transactions of interest" and "transactions of knowledge." A goal of the similarity analysis 210 is to render a binary decision, or provide enough information to facilitate rendering a binary decision, on each of the transactions of interest. For example, the decision translates to different real-world meanings (e.g., 0 or 1 decision implying a customer is showing risk of churn, 0 or 1 decision implying a transaction is fraudulent etc. in the payment transactions space).

In one example, the similarity analysis 210 uses the transactions in the "transactions of knowledge" group and pertinent PII and/or other feature information, to derive similarity scores between each of the transactions. In an example, the derived similarity scores are represented as a symmetric matrix, and in such examples, the upper triangle of the matrix is used rather than all transactions. For example, the similarity analysis 210 uses the upper triangle to calculate a confidence interval of average similarity scores of the associated transactions. The confidence interval indicates the likely range of similarity scores for a given transaction to statistically belong to this pattern. Specifying an alpha of 0.95 indicates a 95% confidence that any given transaction's similarity score should lie within the range of the confidence interval for it to be from this population. The similarity analysis 210 nominally uses t-distribution to derive the confidence interval. In this example, the similarity analysis 210 iterates through each of the "transactions of interest" in the pattern and calculates their similarity score to each of the "transactions of knowledge" in the upper triangle. From this array of similarity scores, similarity analysis 210 calculates an average similarity score for each "transaction of interest." In an example, the similarity analysis 210 checks which of the "transactions of interest" have their average similarity score above the lower threshold of the confidence interval, and determines this set of "transactions of interest" as a detected set of transactions for which the decision is rendered for this set, as it is rendered for the "transactions of knowledge." In an example, the detection is be persisted as a binary flag against the transaction for future reference in the historical patterns 132, in the transaction service 112, in the ML model 116, etc., as described. This dynamic detection of the "transactions of interest" adapts the decision to the localized characteristics of the pattern, based on the similarity score thereof being within the confidence interval, without introducing arbitrary, sometimes irrelevant thresholds for decision making. The dynamic detection, in this regard, assists in avoiding false positives as transactions inadvertently caught in a pattern due to sharing a generic attribute (e.g., country code).

In one example, interface component 128 presents the detected "transactions of interest" via an interface to allow interaction therewith (e.g., by a user) to indicate for each "transaction of interest" whether to render the decision. Whether the interface is used to verify the detection or the detection proceeds without verification, action component 130 takes action in one or more systems based on the detection. As described, in one example, action component 130 indicates a rendered decision for the "transaction of interest" (e.g., classify the transaction as fraudulent), based on the detection, in the transaction service 112 for subsequently rendering decisions on similar transactions, in the ML model 116 for impacting the output for similar transactions, in the historical patterns 132 data store for enabling decisioning on similar transactions in the future, etc. In a specific example, combining the "detection" signals from decisioning component 126 and the pattern information in the historical patterns 132 data store, allows a user (e.g., a subject matter expert) to holistically evaluate patterns for certain metrics (e.g., via an interface provided by interface component 128), such as volume of detections, growth of the pattern, etc., and make a relevant decision (e.g., whether to mark a user as at risk of churn in the transaction service 112, whether to mark a transaction as fraudulent in the transaction service 112, etc.).

Figure 3 is a flowchart of an example of a method 300 for detecting emerging patterns in data used for ML model-based decisions, in accordance with aspects described herein. Method 300 can be performed by a device 100 or other device, and/or one or more components thereof, for generating patterns in transaction data, analyzing the transactions in the patterns to render a decision for certain transactions, etc.

In method 300, at action 302, from received transaction data, multiple patterns of the transaction data can be generated based on feature combination. In an example, pattern generating component 122, e.g., in conjunction with one or more processors 102, memory/memories 104, operating system 106, detection component 108, etc., generates, from received transaction data, multiple patterns of the transaction data based on feature combination. For example, detecting component 108 receives transaction data (e.g., from a transaction service 112, historical patterns 132 data store, etc.), which is based on a request for the transaction data or otherwise receiving the transaction data as transactions occur or based on a periodically updating subscription, etc. Detecting component 108 requests the transaction data for a period of time (e.g., a last number of days). Graph generating component 120 generates a graph based on the transaction data, as described, or detecting component 108 otherwise stores the transaction data in such a way to indicate relationships between transactions having a common feature or a certain number of common features, as described herein. In any case, pattern generating component 122 generates multiple patterns of the transaction data, where each pattern includes a list of transactions having a certain combination of features (e.g., attributes, parameters, or name and value pairs) in common (e.g., features with common values).

In method 300, optionally at action 304, for multiple stored patterns of data corresponding to one or more of the multiple patterns and based on the data entries for the corresponding one or more of the multiple patterns, one or more metrics corresponding to occurrence of the stored pattern is updated and/or displayed. In an example, detection component 108, e.g., in conjunction with one or more processors 102, memory/memories 104, operating system 106, interface component 128, etc., updates (e.g., in historical patterns 132 data store) and/or displays (e.g., on an interface provided by interface component 128), for multiple stored patterns of data corresponding to one or more of the multiple pattens of data generated by pattern generating component 122 and based on the data entries for the corresponding one or more of the multiple patterns, one or more time-based metrics corresponding to occurrence of the stored pattern. As described, for example, the historical patterns 132 data store stores metrics for patterns, and an interface is used to view the metrics to detect emerging trends. Based on the generated multiple patterns in action 302, the stored metrics for the pattern are updated or displayed, based on detecting transactions that match the pattern, based on a request triggered via an interface, and/or the like, as described. Though shown as occurring before filtering at action 306, in some examples, updating or displaying of metrics associated with patterns occur after filtering to update metrics for filtered patterns.

In method 300, at action 306, the multiple patterns can be filtered based on a parameter related to a number of data entries in a given pattern of the multiple patterns to generate a filtered set of patterns. In an example, filtering component 124, e.g., in conjunction with one or more processors 102, memory/memories 104, operating system 106, detection component 108, etc., filters the multiple patterns based on the parameter related to the number of data entries in a given pattern of the multiple patterns to generate a filtered set of patterns. For example, as described, filtering component 124 filters the set of patterns based on one or more parameters such as a minimum transaction volume, a minimum volume of growth, etc. to retain patterns that have a statistical significance (e.g., patterns that have at least a threshold minimum transaction volume or volume of growth, etc.).

In method 300, at action 308, for each pattern, a first set of transactions associated with a decision output by a transaction service and a second set of transactions that do not result in the decision can be created. In an example, decisioning component 126, e.g., in conjunction with one or more processors 102, memory/memories 104, operating system 106, detection component 108, etc., for each pattern (e.g., each pattern in the filtered set of patterns), creates a first set of transactions associated with (e.g., resulting in) a decision output by a transaction service and a second set of transactions that do no result in the decision. For example, decisioning component 126 creates the first set of transactions as "transactions of knowledge," as described above, which includes transactions for which the transaction service 112 rendered a decision (e.g., a decision that the transaction is fraudulent) and creates the second set of transactions as "transactions of interest," as described above, which includes transactions for which the transaction service 112 did not render the decision, but are still part of the given pattern.

In method 300, at action 310, a confidence interval of an average similarly scores can be derived based on a first set of similarity scores between transactions in the first set of transactions. In an example, decisioning component 126, e.g., in conjunction with one or more processors 102, memory/memories 104, operating system 106, detection component 108, etc., derives a confidence interval (e.g., range) of the average similarly scores based on the first set of similarity scores between transactions in the first set of transactions. For example, as described, decisioning component 126 derives the confidence interval using a t-distribution based on an upper triangle of the first set of transactions.

In method 300, at action 312, for each transaction in the second set of transactions, a third set of transactions can be determined as having an average similarity score that is above a lower threshold of the confidence interval. In an example, decisioning component 126, e.g., in conjunction with one or more processors 102, memory/memories 104, operating system 106, detection component 108, etc., for each transaction in the second set of transactions, determines a third set of transactions having an average similarity score that is above the lower threshold of the confidence interval. In this regard, decisioning component 126 determines the third set of transactions as the portion of the second set of transaction (the "transactions of interest") for which to render the decision based on similarity to the first set of transactions (the "transactions of knowledge"). Decisioning component 126 compares the similarity score of each transaction in the second set of transactions to the similarity score of each transaction in the first set of transactions to determine the third set of transactions.

In method 300, at action 314, at least a portion of the third set of transactions to be associated with the decision can be modified. In an example, action component 130, e.g., in conjunction with one or more processors 102, memory/memories 104, operating system 106, detection component 108, etc., modifies at least the portion of the third set of transactions to be associated with the decision, which can include action component 130 modifying a parameter associated with the transaction to indicate the decision, signaling the transaction service 112 and/or ML model 116 to associated the transaction with the rendered decision, and/or the like. Modifying at least the portion of the third set of transactions in this regard includes signaling the transaction service 112, ML model 116, etc., to render the decision for the transactions in the third set of transactions, which can affect subsequent decisioning on transactions and/or ML model output, as described. In one example, action component 130 automatically modifies the third set of transactions in this regard. In another example, action component 130 prompts for approval.

Thus, in an example, in modifying at least the portion of the third set of transactions at action 314, optionally at action 316, an indication of each transaction in the third set of transactions is displayed with an option to approve modifying the transaction. In an example, the indication includes an indication of an identifier and/or other data associated with the transaction. In an example, interface component 128, e.g., in conjunction with one or more processors 102, memory/memories 104, operating system 106, detection component 108, action component 130, etc., displays, via the interface, the indication of each transaction in the third set of transactions with an option to approve modifying the transaction. In this example, displaying the indications of each transaction via the interface allows a user to interact with the interface to approve modification of the transactions in the third set based on associated attributes displayed on the interface.

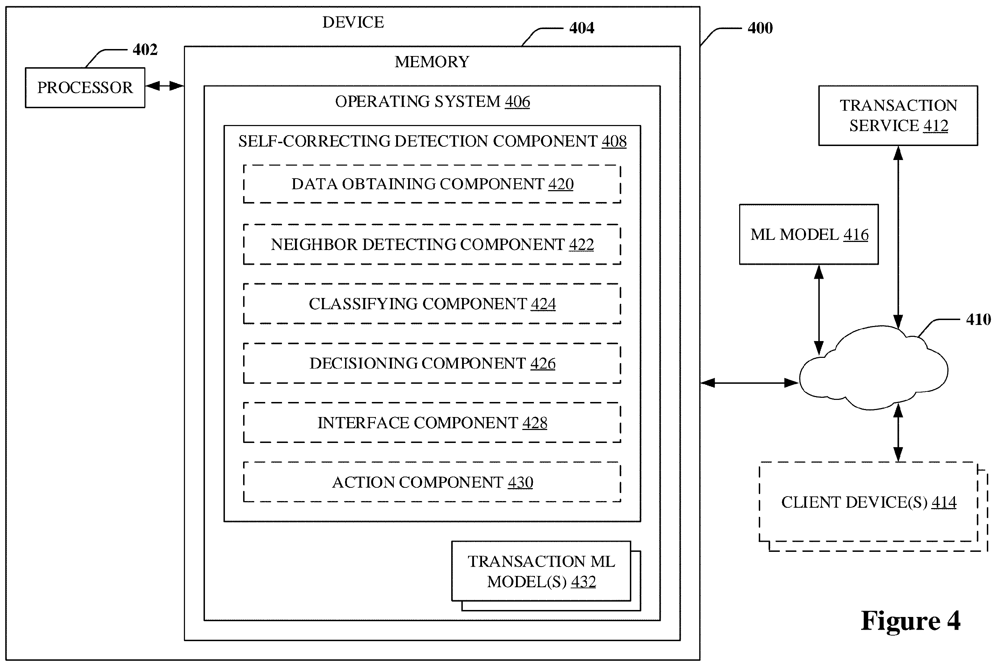

Figure 4 is a schematic diagram of an example of a device 400 (e.g., a computing device) for using one or more ML models for detecting emerging patterns in input data, in accordance with aspects described herein. In an example, device 400 provides functionality of a dynamic self-correcting graph-based detection system, as described herein. As described above, the system is dynamic in its ability to self-correct without requiring user intervention. Device 400 includes one or more processors 402 and/or a memory/memories 404 configured to execute or store instructions or other parameters related to providing an operating system 406, which executes one or more applications or processes, which are similar to processor(s) 102 and/or memory/memories 104 described above with reference to Figure 1. The operating system 106 executes one or more applications or processes, such as, but not limited to, a self-correcting detection component 408 for detecting emerging trends in input data. Device 400 communicates with various other devices via one or more networks 410 (e.g., the Internet and/or one or more network nodes that formulate or communicate with the Internet or another network). In an example, a transaction service 412 is provided, which communicates with various client devices 414, via the one or more networks 410, for providing a transaction thereto, as described above with reference to network(s) 110, transaction service 112, and/or client devices 114 in Figure 1.

In accordance with aspects described herein, self-correcting detection component 408 detects emerging patterns in the input data that is provided to transaction service 412. Self-correcting detection component 408 optionally includes a data obtaining component 420 for obtaining, from one or more data stores, transaction data received from transaction service 412 and/or associated data, such as PII representation data, distance weighted features, transaction labels, etc., as described herein. Self-correcting detection component 408 optionally includes a neighbor detecting component 422 for detecting, for one or more transactions in the obtained transaction data (e.g., based on embeddings of the transaction data), one or more transactions that are neighboring transactions (e.g., transactions that have a threshold similar determined from one or more common features based on similarities in the embeddings). Self-correcting detection component 408 optionally includes a classifying component 424 for classifying, using a trained classifier and based on the transaction embeddings, the transactions as resulting in rendering a certain decision based on similarity between the transaction embedding and embeddings of other transactions. Self-correcting detection component 408 optionally includes a decisioning component 426 for rendering a decision based on the classifier output. Self-correcting detection component 408 optionally includes an interface component 428 for providing information regarding transaction features for transactions for which to consider rendering the decision, and/or an action component 430 for rendering the decision for a transaction based on the classifier output or based on input received from the interface component 428. Self-correcting detection component 408 optionally includes one or more transaction ML models 432, which provide the classifier used to evaluate transaction embeddings. In an example, the transaction ML model(s) 432 include an initial binary classifier, an influence model, and/or the like, as described herein.

The components 408, 420, 422, 424, 426, 428, 430, and/or 432, can be included in, or implemented by, the device 400 and/or in other devices (e.g., in a cloud-computing environment or cloud-based computing platform), but are described herein as provided by the device 400 for ease of explanation. Indeed, in some examples, device 400 is provided by multiple devices or nodes of a cloud-based computing platform. In addition, though shown as separate components or devices, any of device 400, transaction service 412, client devices 414, ML model 416, etc. are implemented in a same device or across multiple devices or nodes. For example, device 400 provides one or more of components 408, 420, 422, 424, 426, 428, 430, and/or 432, and also the transaction service 412.

In an example, data obtaining component 420 receives various data from various sources, which, in some examples, includes real-time transaction data or a list of recent transactions from transaction service 412, a list of historical transactions from transaction service 412 (e.g., from a last number of days, weeks, months, etc.), and/or the like. In addition, data obtaining component 420 receives transaction labels for transactions for which a decision is rendered by the transaction service 412 (e.g., known fraudulent transactions). In one example, the transaction data includes PII or other data that is hashed, and the neighbor detecting component 422 uses the hashed values to determine whether features between the transactions have a common value. In accordance with aspects described herein, one or more of the described functions are performed at a given time and the results stored (e.g., in a cloud-computing environment storage, local storage, etc.) for later use. For example, neighbor classifying component 422 generates neighborhood information for the transaction data (e.g., a set of transactions having a threshold similarity based on the associated embeddings), and then stores the neighborhood information for later execution of functions described in connection with the classifying component 424 for subsequent transactions.

In an example, classifying component 424 updates one or more transaction ML models 432. In an example, the ML models 432 include a trained classifier, an influence model, etc., used to classify the transactions based on the vectors. For a given vector, classifying component 424 compares the vector embedding to vector embeddings of other transactions, or otherwise provides the vector embedding as input to the transaction ML model(s) 432, to obtain a list of transactions with similar embeddings, to obtain an indication of whether to render the decision for the transaction based on its similarity to other transaction with similar embeddings, and/or the like. Decisioning component 426 renders a decision for one or more of the transactions based output from the classifying component 424. Action component 430 then takes action to render the decision for the transaction in one or more other systems. In taking the action to render the decision, in an example, interface component 428 displays an interface with the transaction to allow a person to approve rendering of the decision for the transaction. Action component 430 renders the decision, which includes signaling the transaction and rendered decision information to the ML model 416 to impact subsequent output from the ML model 416, and/or to the transaction service 412 to impact subsequent decisions rendered by the transaction service 412 based on ML model 416 output.

In an example, classifying component 424 maintains and/or updates the transaction ML models 432 over time to detect emerging patterns and detect transactions that follow the pattern for rendering a decision on the transactions. In this regard, given a history of transactions and associated vectors, labels (e.g., labeled as having a decision rendered, such as a fraudulent transaction), etc., classifying component 424 separates the transactions into a training set of transactions for training a binary classifier and/or influence model, a testing set of transactions for testing the binary classifier and/or influence model, and/or a validation set of transactions for validating the testing. Classifying component 424 accordingly trains, tests and/or validates the binary classifier, which may be an ML model that renders binary decisions, and/or influence model over time to detect emerging patterns and appropriately detect transactions that follow the pattern for rendering decisions on transactions.

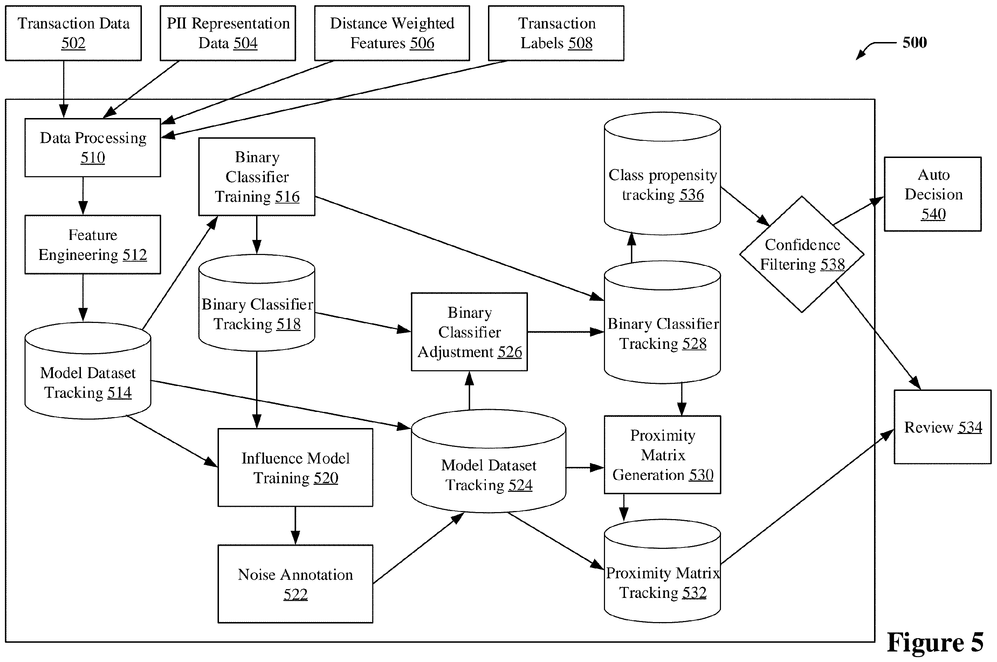

Figure 5 illustrates a data flow 500 of transaction data 202 through a self-correcting detection system, in accordance with aspects described herein. One or more components 408, 420, 422, 424, 426, 428, 430, and/or 432 described in Figure 4 can provide one or more of the functions described in reference to Figure 2.

For example, transaction data 502 is received from a transaction service 412 for evaluation to determine similarity between transactions and render decisions on at least some of the transactions, or at least to train one or more ML models to render the decision (e.g., as part of the transaction service 412 or to correct decisions rendered by the transaction service 412). The transaction data 502 includes raw transaction data with PII obtained and collated from various data sources. In an example, a time period is specified for the transaction data 502 to be obtained (e.g., a number of days, weeks, months, etc.). For example, the transaction data ingestion process for the purpose of training the transaction ML model(s) 432 and/or rendering decisions for transactions received from the transaction service 412 includes sourcing data from a cloud-computing architecture, which includes a history of data (e.g., six months of transaction data downloaded daily in a tabular format). Each transaction in the downloaded transaction data 502 is identified by a unique Transaction ID and includes timestamps, hashed PII identifiers, etc. In addition, labels (e.g., transaction labels 508) corresponding to decisions rendered for transactions (e.g., known fraudulent transactions) are obtained from the cloud-computing architecture based on Transaction ID and/or Account ID as keys (e.g., as a daily snapshot with a scope of the trailing six months).

In an example, representation data for accounts and PII data (e.g., PII representation data 504) is downloaded from the cloud-computing environment in the form of n-dimensional vectors, stored as key-value pairs in a database, and updated daily using Account ID and PII hashed values as keys. As described, data obtaining component 420 obtains such data, and neighbor detecting component 422 detects neighboring transactions based on embedding similarities between the transactions. In addition, in an example, similarity features (distance weighted features 506) are downloaded from the cloud-computing environment, which data obtaining component 420 similarly obtains daily at the account and event level, and stores in the cloud-computing environment for later retrieval or other usage. The various data entries 502, 504, 506, 508 are ingested by a data processing 510 function, as described above.

In an example, based on the data ingested during data processing 510, feature selection and feature engineering 512 is performed (e.g., by neighbor detecting component 422) to enhance the dataset by allowing use of previously unusable information to detect similarities, such as PII. Feature selection and feature engineering 512 in this regard includes selecting hashed PII feature data from the transactions in the dataset and generating new features from the selected hashed PII feature data. The resulting combined data is split into training, testing, and validation datasets (e.g., by classifying component 424), which includes a random selection process to generate the datasets. In an example, classifying component 424 saves the datasets into the cloud-computing environment, e.g., in model dataset tracking 514 data store, on a periodic basis (e.g., daily). Saving the datasets allows data to be stored and tracked for later use, maintaining a robust and efficient workflow for decision rendering (e.g., fraud detection).

A binary classifier training 516 obtains the training dataset from the model dataset tracking 514 data store for performing an initial binary classifier training. Binary classifier training 516 utilizes a gradient boosting framework to train the binary classifier of one or more transaction ML models 432. Classifying component 424 performs binary classifier training 516 using transactions having known labels (e.g., rendered decisions), which, in some examples, includes the training dataset, to ensure accuracy. Classifying component 424 performs evaluation on testing and validation datasets to assess performance for the binary classifier. In an example, classifying component 424 performs the binary classifier training 516 daily, or other period or based on a request or event, which allows the binary classifier to continuously learn and adapt to new data. Classifying component 424 stores the binary classifier in binary classifier tracking 518 data store for later reuse and correction. Storing the binary classifier in this regard ensures that the binary classifier remains up-to-date and is fine-tuned as needed to maintain its effectiveness in render decisions (e.g., detecting fraud).

Classifying component 424 uses an influence model, such as an influence score matrix, to assess a noise level within the training dataset. An influence model training 520 function downloads, from the binary classifier stored in binary classifier tracking 518 data store, training data (including a number, m, of samples), and inference data (including a number, n, of samples). Using this data, influence model training 520 builds or updates an influence model to evaluate the impact of each training sample on the binary classifier's predictions. The result includes an $m \times n$ influence score matrix, which indicates the influence scores for each combination of training and inference samples. A highly negative vector embedding (-ve) score (e.g., less than a threshold) indicates that the vector is noise, and a highly positive vector embedding *(+ve)* score (e.g., at least a threshold) indicates that the vector contributes towards reducing the uncertainty in the prediction. The influence model training 520 performs noise annotation 522 to save an indication of noise for the associated transactions and saves the annotated matrix in model dataset tracking 524 data store for future reference. In an example, influence model training 520 generates this matrix daily, or according to another period or based on an event, to continuously monitor and adjust for noise in the training dataset, ensuring that the binary classifiers remain accurate and reliable.

An influence model approximates change in a test instance's prediction when a training instance is removed. For a tree-based implementation, the influence model tracks how the model's internal structure (specifically, the leaf values of the boosted trees) would change without that training instance. These changes are then used to estimate the influence. The approximation uses gradients and residuals calculated during the training step. In gradient boosting, a gradient refers to the loss function with respect to the model's predictions and indicates the direction of steepest ascent. Boosting algorithms fit new trees to these gradients to iteratively reduce the loss. The difference between the true target values and the model's current predictions are the residuals. These residuals represent the part of the target that the model has not yet captured. In many boosting implementations, the gradients and residuals are closely related. The influence model calculates how the values in the leaves of each boosted tree would change if a specific training instance were removed; these changes are referred to as "leaf derivatives."

The influence of a training instance on a test instance's prediction is approximated by aggregating the effects of the leaf derivatives across all trees. This aggregation involves the gradients of the loss function evaluated at the test instance's prediction. For a given tree and class, the gradient and Hessian of the loss function with respect to the model's predictions are computed. The gradient and Hessian of the loss function are calculated for all training instances that fall into the leaf in question. In one example, the original leaf value is determined using the following formula:

$$leaf_{value} = \frac{sum\ of\ gradients\ in\ leaf}{sum\ of\ Hessians\ in\ leaf + L2\ regularization} * learning\_rate$$

The leaf value is recalculated as if the training instance being analyzed had been removed during training. The recalculation involves recomputing the sums of gradients and Hessians, excluding the contribution of the removed instance. The leaf derivative is the difference between the original leaf value and the recalculated leaf value. In an example, influence model training 520 function performs the above operations to train the influence model, as described herein.

In addition, in an example, classifying component 424 performs a binary classifier adjustment 526 function to correct the binary classifier. The binary classifier adjustment 526 obtains the influence score matrix from model dataset tracking 524 data store, along with the training, testing, and validation datasets, and the original trained model (e.g., daily or according to another period or based on a request or event). Using the influence matrix, binary classifier adjustment 526 identifies the training data with the most noise (e.g., data with a noise annotation that has, on average have a -ve influence score. Binary classifier adjustment 526 removes these samples from the training dataset to create a cleaned training dataset, and then marks the corresponding labels as unknown (e.g., no decision rendered). Binary classifier adjustment 526 adjusts the trained model using the cleaned training dataset and generates inference scores on all the data. Binary classifier adjustment 526 saves the adjusted model, cleaned training dataset, and inference scores into binary classifier tracking 528 data store, so that the model remains accurate and effective in detecting emerging patterns in transaction data. Classifying component 424 performs the training and influence training or other adjustment of the binary classifier daily (or according to another period or based on a request of event) to maintain the integrity and performance of the binary classifier.

In another example, classifying component 424 includes a proximity matrix generation 530 function for generating a proximity matrix based on training the tree-based model using the cleaned training dataset, so that the binary classifier is built on high-quality data, free from noise, which enhances its accuracy and reliability. In an example, once the binary classifier is trained, proximity matrix generation 530 calculates the proximity matrix on all the data. The proximity matrix provides valuable insights into the relationships and similarities between different data points, which facilitates identifying patterns and anomalies in the data. After generating the proximity matrix, proximity matrix generation 530 saves the output in proximity matrix tracking 532 data store (e.g., in the cloud-computing environment) for future reference and analysis. In an example, proximity matrix tracking 532 generates the proximity matrix daily (or based on another period, a request, or an event), allowing the system to continuously learn and adapt to new data, maintaining its effectiveness in rendering decisions on transactions (e.g., detecting fraud). In an example, the proximity matrix, or data generated based on the proximity matrix, is displayed for review 534 (e.g., as an interface provided by interface component 428). In an example, a user reviews the proximity matrix or related data to observe emerging patterns in the data (e.g., transactions having a threshold proximity, or a given number of similar transactions having less than a threshold proximity, etc.).

In an example, decisioning component 426 moves or copies transactions from binary classifier tracking 528 data store to class propensity tracking 536 data store, which includes transactions that are nearest neighbors based on having a most similar vector embedding score. A confidence filtering 538 process determines a confidence for classification of each of multiple transactions in the class propensity tracking 536 data store. The confidence filtering 538 process handles transactions for rendering decisions using two steps, in one example: auto-decision and manual review or investigation. For example, transactions with high confidence and high likelihood of decision (e.g., high risk scores determined by the transaction service 412) are identified using inference scores. Confidence filtering 538 submits these transactions for auto-decision 540 (e.g., a decision rendered automatically for the transaction, such as auto-rejection as fraud, ensuring that potential fraud is swiftly addressed). In an example, confidence filtering 538 is performed daily (or based on another period, request, or event) to maintain up to date decisioning (e.g., fraud detection) for transactions. In an example, confidence filtering 538 identifies transactions with low confidence by high-risk scores by using inference scores and retrieves their nearest neighbors using the proximity matrix. This additional data provides context and aids in the manual investigation process. In an example, confidence filtering 538 submits these transactions, along with their nearest neighbors' data, for manual review 534 (e.g., by presentation on an interface provided by interface component 428 allowing a user to review and approve the decision). This dual approach ensures that high-confidence decisions are automatically rendered (e.g., high-confidence fraud is automatically rejected), while low-confidence cases receive further examination, maintaining a robust and efficient decisioning system.

Figure 6 is a flowchart of an example of a method 600 for detecting, using one or more ML models, emerging patterns in data used for ML model-based decisions, in accordance with aspects described herein. Method 600 can be performed by a device 400 or other device, and/or one or more components thereof, for generating patterns in transaction data, analyzing the transactions in the patterns to render a decision for certain transactions, etc.

In method 600, at action 602, for a collection of transaction data including multiple transactions, an embedding associated with each transaction of the multiple transactions can be obtained. In an example, data obtaining component 420, e.g., in conjunction with one or more processors 402, memory/memories 404, operating system 406, self-correcting detection component 408, etc., obtains, for a collection of transaction data including multiple transactions, an embedding associated with each transaction of the multiple transactions. For example, data obtaining component 420 obtains the embeddings for the transaction data along with other related data, such as PII representation data (e.g., hashed values representing the PII in the transaction data), distance weighted features, which are computed in a feature engineering 512 function and stored for later use, transaction labels (e.g., a rendered decision), etc.

In method 600, at action 604, for the transaction data and based on a similarity between the embeddings (e.g., of the transactions in the transaction data), neighboring sets of transactions having similar features can be determined. In an example, neighbor detecting component 422, e.g., in conjunction with one or more processors 402, memory/memories 404, operating system 406, self-correcting detection component 408, etc., determines, for the transaction data and based on a similarity between the embeddings, neighboring sets of transactions having similar features. For example, neighbor detecting component 422 compares the embeddings to detect sets of associated transactions having similarity scores (e.g., a score of similarity between embeddings associated with the transactions) within a threshold. In an example, neighbor detecting component 422 also detects similar features in this regard and generates information regarding the distance weighted features for neighboring transactions.

In method 600, at action 606, based on the neighboring sets of transactions, at least a portion of the transaction data can be separated into a training dataset for training a ML model, and a testing dataset and/or validation dataset for assessing performance of the ML model. In an example, classifying component 424, e.g., in conjunction with one or more processors 402, memory/memories 404, operating system 406, self-correcting detection component 408, etc., separates, based on the neighboring sets of transactions, at least the portion of the transaction data into the training dataset for training the ML model (e.g., one or more transaction ML models 432), and the testing dataset and/or validation dataset for assessing performance of the ML model. In an example, the training dataset includes the transactions labeled as having a rendered decision (e.g., labeled as fraudulent), whereas the testing and validation datasets include transactions that are not labeled. In an example, classifying component 424 uses the training dataset to train the ML model, which, in some examples, is a binary classifier, described above, and/or uses the testing and/or validation datasets to assess performance of the binary classifier for use in modifying transactions to have rendered decisions, as described herein.

In method 600, optionally at action 608, based on the training dataset and an inference dataset of the transaction data, an influence score matrix indicating influence scores for each combination of data from the training and inference datasets can be generated from the ML model. In an example, classifying component 424, e.g., in conjunction with one or more processors 402, memory/memories 404, operating system 406, self-correcting detection component 408, etc., generates, from the ML model (e.g., one or more transaction ML models 432) and based on the training dataset and inference dataset of the transaction data, the influence score matrix indicating influence scores for each combination of data from the training dataset and the inference dataset. Classifying component 424 generates the influence score matrix, as described above, to generate ve scores for each transaction in the training dataset, which is used to refine and improve the one or more transaction ML models 432.

In method 600, at action 610, the ML model can be corrected at least in part by removing a portion of the multiple transactions from the training dataset. In an example, classifying component 424, e.g., in conjunction with one or more processors 402, memory/memories 404, operating system 406, self-correcting detection component 408, etc., corrects the ML model (e.g., one or more transaction ML models 432) at least in part by removing a portion of the multiple transactions from the training dataset. Correcting the ML model can optionally include, at action 612, determining, based on the influence score matrix, noise data from the training dataset that has a threshold noise and removing the noise data from the training dataset. In an example, classifying component 424, e.g., in conjunction with one or more processors 402, memory/memories 404, operating system 406, self-correcting detection component 408, etc., corrects the ML model (e.g., one or more transaction ML models 432) at least in part by determining, based on the influence score matrix, noise data from the training dataset that has a threshold noise, and removing the noise data from the training dataset. Classifying component 424 removes transaction from the training dataset that have a negative ve score less than a threshold or otherwise do not have at least a positive ve score that achieves a threshold. As described, in some examples, this process is periodically performed to improve the one or more transaction ML models 432 used to render decisions on transactions. The noise-corrected ML model is used in rendering decisions on transaction data, which is used as part of modifying transactions to be associated with a decision (e.g., at action 616), generating a proximity matrix (e.g., at action 614), and/or the like, as described herein.

In method 600, optionally at action 614, based on the neighboring sets of transactions, a proximity matrix indicating similarities between transactions in the training dataset can be generated. In an example, classifying component 424, e.g., in conjunction with one or more processors 402, memory/memories 404, operating system 406, self-correcting detection component 408, etc., generates, based on the neighboring sets of transactions, the proximity matrix indicating similarities between transactions in the training dataset. As described, the proximity matrix indicates similarities between transactions (e.g., a transaction and its neighbors determined based on similarities of embeddings). As described, for example, an interface generated by interface component 428 displays the similarities indicated in the proximity matrix to allow for detecting emerging patterns in the transaction data. In another example, decisioning component 426 uses the proximity matrix to determine neighboring transactions for a transaction for which a decision is to be rendered (e.g., to display the neighboring transactions for manual decisioning or to compare embeddings to derive a similarity for automatic decisioning).

In method 600, at action 616, based on output of the ML model for at least a first portion of transactions in the neighboring sets of transactions, at least a second portion of transactions in the neighboring sets of transactions can be modified to be associated with a decision. In an example, action component 430, e.g., in conjunction with one or more processors 402, memory/memories 404, operating system 406, self-correcting detection component 408, etc., modifies, based on output of the ML model (e.g., ML model 432) for at least the first portion of transactions in the neighboring sets of transactions, at least the second portion of transactions in the neighboring sets of transactions to be associated with the decision. ML model 432 renders a decision for the first portion of the transactions in a neighboring set of transactions, and the action component 430 renders the decisions for the second portion of the transaction, for which the ML model 432 has not rendered the decision, based on the transactions being in a neighboring set.

In one example, optionally at action 618, an indication of each transaction in at least the second portion of transactions is displayed, via an interface, with an option to approve modifying the transaction. In an example, interface component 428, e.g., in conjunction with one or more processors 402, memory/memories 404, operating system 406, self-correcting detection component 408, etc., displays, via the interface, the indication of each transaction in at least the second portion of transactions with the option to approve modifying the transaction (e.g., to render the decision for the transaction). Thus, at least in some cases, manual review of the transaction modification is facilitated. In one example, action component 430 determines to display, via interface component 428, the interface for certain transactions of the second portion of transactions based on a similarity score between the certain transactions not being within a threshold difference of the transactions that are in the set of neighboring transactions.

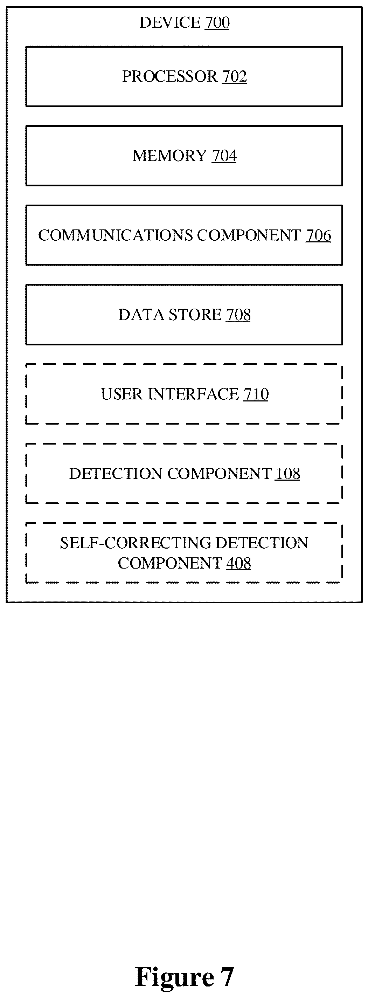

Figure 7 illustrates an example of device 700 including additional optional component details as those shown in Figures 1 and 4. In one aspect, device 700 includes processor 702, which may be similar to processor(s) 102 or 402 for carrying out processing functions associated with one or more of components and functions described herein. In some examples, processor 702 includes a single or multiple set of processors or multi-core processors. Moreover, in some examples, processor 702 is implemented as an integrated processing system and/or a distributed processing system.

Device 700 further includes memory 704, which may be similar to memory/memories 104 or 404 such as for storing local versions of operating systems (or components thereof) and/or applications being executed by processor 702, such as a detection component 108, self-correcting detection component 408, one or more components thereof, etc. Memory 704 includes a type of memory usable by a computer, such as random-access memory (RAM), read only memory (ROM), tapes, magnetic discs, optical discs, volatile memory, non-volatile memory, and any combination thereof.

Further, device 700 includes a communications component 706 that provides for establishing and maintaining communications with one or more other devices, parties, entities, etc. utilizing hardware, software, and services as described herein. Communications component 706 carries communications between components on device 700, as well as between device 700 and external devices, such as devices located across a communications network and/or devices serially or locally connected to device 700. For example, communications component 706 includes one or more buses, and further includes transmit chain components and receive chain components associated with a wireless or wired transmitter and receiver, respectively, operable for interfacing with external devices.

Additionally, device 700 includes a data store 708, which is any suitable combination of hardware and/or software, which provides for mass storage of information, databases, and programs employed in connection with aspects described herein. For example, data store 708 includes a data repository for operating systems (or components thereof), applications, related parameters, etc.) not currently being executed by processor 702. In addition, in an example, data store 708 is a data repository for a detection component 108, self-correcting detection component 408, one or more components thereof, and/or one or more other components of the device 700.

Device 700 optionally includes a user interface component 710 operable to receive inputs from a user of device 700 and further operable to generate outputs for presentation to the user. For example, user interface component 710 provides and/or processes interaction with interface component(s) 128 or 428, as described herein. For example, user interface component 710 includes one or more input devices, including but not limited to a keyboard, a number pad, a mouse, a touch-sensitive display, a navigation key, a function key, a microphone, a voice recognition component, a gesture recognition component, a depth sensor, a gaze tracking sensor, a switch or button, any other mechanism capable of receiving an input from a user, or any combination thereof. Further, for example, user interface component 710 includes one or more output devices, including but not limited to a display, a speaker, a haptic feedback mechanism, a printer, any other mechanism capable of presenting an output to a user, or any combination thereof.

Described are examples for detecting emerging patterns in data. A detection system for detecting patterns outside of supervised machine learning models is provided for determining similarity scores between transactions to detect the emerging patterns. Transactions in the pattern can be reviewed to determine whether to render decisions on the transactions or similar subsequently occurring transactions. A self-correcting detection system is also provided for using machine learning models to correct for emerging patterns in the transaction data.

Some further example aspects are provided below.

Aspect 1 is a method for detecting emerging patterns in transaction data that includes generating, from received transaction data, multiple patterns of the transaction data based on feature combination, where each pattern of the transaction data has a same number of common attributes, filtering the multiple patterns based on a parameter related to a number of data entries in each pattern to generate a filtered set of patterns, for each pattern in the filtered set of patterns, creating a first set of transactions resulting in a decision output by a transaction service and a second set of transactions that do not result in the decision, deriving a confidence interval of average similarity scores based on a first set of similarity scores between transactions in the first set of transactions, for each transaction in the second set of transactions, determining a third set of transactions having an average similarity score that is above a lower threshold of the confidence interval, and modifying at least a portion of the third set of transactions to be associated with the decision.

In Aspect 2, the method of Aspect 1 includes where modifying the third set of transactions includes displaying, via an interface, an indication of each transaction in the third set of transactions with an option to approve modifying the transaction, and modifying each transaction in at least the portion of the third set of transactions based receiving, via the interface, an indication of an approval to modify the transaction.

In Aspect 3, the method of any of Aspects 1 or 2 includes where the decision is rendered for the first set of transactions by a ML model, and where modifying at least the portion of the third set of transactions includes signaling the ML model to apply the decision to at least the portion of the third set of transactions.

In Aspect 4, the method of any of Aspects 1 to 3 includes where the parameter for filtering the multiple patterns includes a threshold volume of data entries in each pattern of the multiple patterns over a period of time.

In Aspect 5, the method of Aspect 4 includes where the threshold volume of data entries corresponds to one or more of a minimum transaction volume over the period of time or a minimum of volume growth over the period of time.

In Aspect 6, the method of any of Aspects 1 to 5 includes updating, for multiple stored patterns of data corresponding to one or more of the multiple patterns and based on the data entries for the corresponding one or more of the multiple patterns, one or more time-based metrics corresponding to occurrence of the stored pattern.

In Aspect 7, the method of Aspect 6 includes displaying, via an interface, an indication of the one or more time-based metrics corresponding to occurrence of at least a portion of the multiple stored patterns of data.

In Aspect 8, the method of any of Aspects 6 or 7 includes where, for a pattern of the multiple stored patterns of data, the one or more time-based metrics correspond to one or more of a time the pattern is first detected or a time the pattern is last detected.

In Aspect 9, the method of any of Aspects 1 to 8 includes where the transaction data corresponds to transactions for which fraud is assessed, and where the decision corresponds to a decision, based on a risk score output by a ML model for the transaction data, of whether the first set of transactions and the second set of transactions are fraudulent.

Aspect 10 is a method for detecting emerging patterns in data that includes obtaining, for a collection of transaction data including multiple transactions, an embedding associated with each transaction of the multiple transactions, determining, for the transaction data and based on a similarity between the embeddings, neighboring sets of transactions having similar features, separating, based on the neighboring sets of transactions, at least a portion of the transaction data into a training dataset for training a ML model and a validation set for assessing performance of the ML model, correcting the ML model at least in part by removing a portion of the multiple transactions from the training dataset, and modifying, based on output of the ML model for at least a first portion of transactions in the neighboring sets of transactions, at least a second portion of transactions in the neighboring sets of transactions to be associated with a decision.

In Aspect 11, the method of Aspect 10 includes generating, from the ML model and based on the training dataset and an inference dataset of the transaction data, an influence score matrix indicating influence scores for each combination of data from the training dataset and the inference dataset.

In Aspect 12, the method of Aspect 11 includes where correcting the ML model includes determining, based on the influence score matrix, noise data from the training dataset that has a threshold noise, and where removing the portion of the multiple transactions is based on the portion of the multiple transactions being the noise data.

In Aspect 13, the method of any of Aspects 10 to 12 includes generating, based on the neighboring sets of transactions, a proximity matrix indicating similarities between transaction in the training dataset, where modifying at least the second portion of transactions in the neighboring sets of transactions is based on the proximity matrix indicating a proximity between at least the first portion of transactions and the second portion of transactions.

In Aspect 14, the method of any of Aspects 10 to 13 includes where at least one of the neighboring sets of transactions includes a portion of the multiple transactions for which the decision is rendered by the ML model, and another portion of the multiple transactions having one or more similar features as the portion of the multiple transactions for which the decision is rendered.

In Aspect 15, the method of any of Aspects 10 to 14 includes where the collection of transaction data includes representations of PII, distance weighted features, and transaction labels.

In Aspect 16, the method of any of Aspects 10 to 15 includes where modifying at least the second portion of transactions in the neighboring sets of transactions is based on displaying, via an interface, an indication of each transaction in at least the second portion of transactions with an option to approve modifying the transaction, and receiving an input, via the interface, of approval to modify the transaction.

Aspect 17 is an apparatus including one or more processors, one or more memories coupled with the one or more processors, and instructions stored in the one or more memories and operable, when executed by the one or more processors, to cause the apparatus to perform any of the methods of Aspects 1 to 16.

Aspect 18 is an apparatus for including means for performing any of the methods of Aspects 1 to 16.

Aspect 19 is one or more computer-readable media including code executable by one or more processors, the code including code for performing any of the methods of Aspects 1 to 16.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, one or more of the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described herein that are known or later come to be known to those of ordinary skill in the art are expressly included and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

**Claims**

1. A device (100) for detecting emerging patterns in transaction data, comprising:

   one or more memories (104) storing instructions; and
   one or more processors (102) coupled to the one or more memories and configured to execute the instructions to:

      generate (302), from received transaction data, multiple patterns of the transaction data based on feature combination, where each pattern of the transaction data has a same number of common attributes;
      filter (306) the multiple patterns based on a parameter related to a number of data entries in each pattern to generate a filtered set of patterns;
      for each pattern in the filtered set of patterns, create (308) a first set of transactions associated with a decision output by a transaction service and a second set of transactions that do not result in the decision;
      derive (310) a confidence interval of average similarity scores based on a first set of similarity scores between transactions in the first set of transactions;
      for each transaction in the second set of transactions, determine (312) a third set of transactions having an average similarity score that is above a lower threshold of the confidence interval; and
      modify (314) at least a portion of the third set of transactions to be associated with the decision.

2. The device of claim 1, wherein the one or more processors are configured to execute the instructions to modify the third set of transactions including:

      displaying, via an interface, an indication of each transaction in the third set of transactions with an option to approve modifying the transaction; and
      modifying each transaction in at least the portion of the third set of transactions based receiving, via the interface, an indication of an approval to modify the transaction.

3. The device of any of claims 1 or 2, wherein the decision is rendered for the first set of transactions by a machine learning, ML, model, and wherein the one or more processors are configured to execute the instructions to modify at least the portion of the third set of transactions including signaling the ML model to apply the decision to at least the portion of the third set of transactions.

4. The device of any of claims 1 to 3, wherein the parameter for filtering the multiple patterns includes a threshold volume of data entries in each pattern of the multiple patterns over a period of time.

5. The device of claim 4, wherein the threshold volume of data entries corresponds to one or more of a minimum transaction volume over the period of time or a minimum of volume growth over the period of time.

6. The device of ant of claims 1 to 5, wherein the one or more processors are configured to execute the instructions to update, for multiple stored patterns of data corresponding to one or more of the multiple patterns and based on the data entries for the corresponding one or more of the multiple patterns, one or more time-based metrics corresponding to occurrence of the stored pattern.

7. The device of claim 6, wherein the one or more processors are configured to execute the instructions to display, via an interface, an indication of the one or more time-based metrics corresponding to occurrence of at least a portion of the multiple stored patterns of data.

8. The device of any of claims 6 or 7, wherein, for a pattern of the multiple stored patterns of data, the one or more time-based metrics correspond to one or more of a time the pattern is first detected or a time the pattern is last detected.

9. The device of any of claims 1 to 8, wherein the transaction data corresponds to transactions for which fraud is assessed, and wherein the decision corresponds to a decision, based on a risk score output by a machine learning, ML, model for the transaction data, of whether the first set of transactions and the second set of transactions are fraudulent.

10. A device (400) for detecting emerging patterns in transaction data, comprising:

   one or more memories (404) storing instructions; and
   one or more processors (402) coupled to the one or more memories and configured to execute the instructions to:

      obtain (602), for a collection of transaction data including multiple transactions, an embedding associated with each transaction of the multiple transactions;
      determine (604), for the transaction data and based on a similarity between the embeddings, neighboring sets of transactions having similar features;
      separate (606), based on the neighboring sets of transactions, at least a portion of the transaction data into a training dataset for training a machine learning, ML, model and a validation set for assessing performance of the ML model;
      correct (610) the ML model at least in part by removing a portion of the multiple transactions from the training dataset; and
      modify (616), based on output of the ML model for at least a first portion of transactions in the neighboring sets of transactions, at least a second portion of transactions in the neighboring sets of transactions to be associated with a decision.

11. The device of claim 10, wherein the one or more processors are configured to execute the instructions to generate, from the ML model and based on the training dataset and an inference dataset of the transaction data, an influence score matrix indicating influence scores for each combination of data from the training dataset and the inference dataset.

12. The device of claim 11, wherein the one or more processors are configured to execute the instructions to correct the ML model including determining, based on the influence score matrix, noise data from the training dataset that has a threshold noise, and wherein the one or more processors are configured to execute the instructions to remove the portion of the multiple transactions based on the portion of the multiple transactions being the noise data.

13. The device of any of claims 10 to 12, wherein the one or more processors are configured to execute the instructions to generate, based on the neighboring sets of transactions, a proximity matrix indicating similarities between transaction in the training dataset, wherein the one or more processors are configured to execute the instructions to modify at least the second portion of transactions in the neighboring sets of transactions based on the proximity matrix indicating a proximity between at least the first portion of transactions and the second portion of transactions.

14. The device of any of claims 10 to 13, wherein at least one of the neighboring sets of transactions includes a portion of the multiple transactions for which the decision is rendered by the ML model, and another portion of the multiple transactions having one or more similar features as the portion of the multiple transactions for which the decision is rendered.

15. A computer-implemented method (300) for detecting emerging patterns in transaction data, comprising:

generating (302), from received transaction data, multiple patterns of the transaction data based on feature combination, where each pattern of the transaction data has a same number of common attributes;
filtering (306) the multiple patterns based on a parameter related to a number of data entries in each pattern to generate a filtered set of patterns;
for each pattern in the filtered set of patterns, creating (308) a first set of transactions associated with a decision output by a transaction service and a second set of transactions that do not result in the decision;
deriving (310) a confidence interval of average similarity scores based on a first set of similarity scores between transactions in the first set of transactions;
for each transaction in the second set of transactions, determining (312) a third set of transactions having an average similarity score that is above a lower threshold of the confidence interval; and
modifying (314) at least a portion of the third set of transactions to be associated with the decision.

Figure 1

DEVICE — 104 — 100

PROCESSOR — 102

MEMORY

OPERATING SYSTEM 106

DETECTION COMPONENT 108

GRAPH GENERATING COMPONENT 120

PATTERN GENERATING COMPONENT 122

FILTERING COMPONENT 124

DECISIONING COMPONENT 126

INTERFACE COMPONENT 128

ACTION COMPONENT 130

HISTORICAL PATTERNS 132

TRANSACTION SERVICE 112

ML MODEL 116

— 110

CLIENT DEVICE(S) 114

EP 4 773 062 A1

**Figure 2**

300 ⟍

302

GENERATE, FROM RECEIVED TRANSACTION DATA, MULTIPLE PATTERNS OF THE TRANSACTION DATA BASED ON FEATURE COMBINATION

304

UPDATE AND/OR DISPLAY, FOR EACH OF MULTIPLE STORED PATTERNS OF DATA CORRESPONDING TO ONE OR MORE OF THE MULTIPLE PATTERNS AND BASED ON THE DATA ENTRIES FOR THE CORRESPONDING ONE OR MORE OF THE MULTIPLE PATTERNS, ONE OR MORE TIME-BASED METRICS CORRESPONDING TO OCCURRENCE OF THE STORED PATTERN

306

FILTER THE MULTIPLE PATTERNS BASED ON A PARAMETER RELATED TO A NUMBER OF DATA ENTRIES IN A GIVEN PATTERN OF THE MULTIPLE PATTERNS TO GENERATE A FILTERED SET OF PATTERNS

308

FOR EACH PATTERN, CREATE A FIRST SET OF TRANSACTIONS ASSOCIATED WITH A DECISION OUTPUT BY A TRANSACTION SERVICE AND A SECOND SET OF TRANSACTIONS THAT DO NOT RESULT IN THE DECISION

310

DERIVE A CONFIDENCE INTERVAL OF AVERAGE SIMILARITY SCORES BASED ON A FIRST SET OF SIMILARITY SCORES BETWEEN TRANSACTIONS IN THE FIRST SET OF TRANSACTIONS

312

FOR EACH TRANSACTION IN THE SECOND SET OF TRANSACTIONS, DETERMINE A THIRD SET OF TRANSACTIONS HAVING AN AVERAGE SIMILARITY SCORE THAT IS ABOVE A LOWER THRESHOLD OF THE CONFIDENCE INTERVAL

314

MODIFY AT LEAST A PORTION OF THE THIRD SET OF TRANSACTIONS TO BE ASSOCIATED WITH THE DECISION

316

DISPLAY, VIA AN INTERFACE, AN INDICATION OF EACH TRANSACTION IN THE THIRD SET OF TRANSACTIONS WITH AN OPTION TO APPROVE MODIFYING THE TRANSACTION

**Figure 3**

400

402 — PROCESSOR

404 — MEMORY

DEVICE

OPERATING SYSTEM 406

SELF-CORRECTING DETECTION COMPONENT 408

DATA OBTAINING COMPONENT 420

NEIGHBOR DETECTING COMPONENT 422

CLASSIFYING COMPONENT 424

DECISIONING COMPONENT 426

INTERFACE COMPONENT 428

ACTION COMPONENT 430

TRANSACTION ML MODEL(S) 432

TRANSACTION SERVICE 412

410

ML MODEL 416

CLIENT DEVICE(S) 414

**Figure 4**

Figure 5

600 ⟍

602

OBTAIN, FOR A COLLECTION OF TRANSACTION DATA INCLUDING MULTIPLE TRANSACTIONS, AN EMBEDDING ASSOCIATED WITH EACH TRANSACTION OF THE MULTIPLE TRANSACTIONS

604

DETERMINE, FOR THE TRANSACTION DATA AND BASED ON A SIMILARITY BETWEEN THE EMBEDDINGS, NEIGHBORING SETS OF TRANSACTIONS HAVING SIMILAR FEATURES

606

SEPARATE, BASED ON THE NEIGHBORING SETS OF TRANSACTIONS, AT LEAST A PORTION OF THE TRANSACTION DATA INTO A TRAINING DATASET FOR TRAINING A ML MODEL AND A TESTING AND/OR VALIDATION SET FOR ASSESSING PERFORMANCE OF THE ML MODEL

608

GENERATE, FROM THE ML MODEL AND BASED ON THE TRAINING DATASET AND AN INFERENCE DATASET OF THE TRANSACTION DATA, AN INFLUENCE SCORE MATRIX INDICATING INFLUENCE SCORES FOR EACH COMBINATION OF DATA FROM THE TRAINING AND INFERENCE DATASETS

610

CORRECT THE ML MODEL AT LEAST IN PART BY REMOVING A PORTION OF THE MULTIPLE TRANSACTIONS FROM THE TRAINING DATASET

612

DETERMINE, BASED ON THE INFLUENCE SCORE MATRIX, NOISE DATA FROM THE TRAINING DATASET AND REMOVE THE NOISE DATA

614

GENERATE, BASED ON THE NEIGHBORING SETS OF TRANSACTIONS, A PROXIMITY MATRIX INDICATING SIMILARITIES BETWEEN TRANSACTION IN THE TRAINING DATASET

616

MODIFY, BASED ON OUTPUT OF THE ML MODEL FOR AT LEAST A FIRST PORTION OF TRANSACTIONS IN THE NEIGHBORING SETS OF TRANSACTIONS, AT LEAST A SECOND PORTION OF TRANSACTIONS IN THE NEIGHBORING SETS OF TRANSACTIONS TO BE ASSOCIATED WITH A DECISION

618

DISPLAY, VIA AN INTERFACE, AN INDICATION OF EACH TRANSACTION IN AT LEAST THE SECOND PORTION OF TRANSACTIONS WITH AN OPTION TO APPROVE MODIFYING THE TRANSACTION

**Figure 6**

DEVICE 700

PROCESSOR 702

MEMORY 704

COMMUNICATIONS COMPONENT 706

DATA STORE 708

USER INTERFACE 710

DETECTION COMPONENT 108

SELF-CORRECTING DETECTION COMPONENT 408

**Figure 7**

## EUROPEAN SEARCH REPORT

**Application Number**

EP 25 22 5998

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/218369 A1 (XIAO BINGJUN [US] ET AL) 2 August 2018 (2018-08-02) | 1-9,15 | INV. G06Q20/40 |
| A | * paragraphs [0001], [0068] - [0071], [0081] - [0095] * | 10-14 | |
| | ----- | | |
| X | US 2021/233080 A1 (SHEKHAR SHUBHRANSHU [US] ET AL) 29 July 2021 (2021-07-29) | 10-14 | |
| A | * paragraphs [0064], [0072], [0096] - [0122] * | 1-9,15 | |
| | ----- | | |

**TECHNICAL FIELDS SEARCHED (IPC)**

G06Q
G06E
G06N

The present search report has been drawn up for all claims

| Place of search | Date of completion of the search | Examiner |
|---|---|---|
| The Hague | 15 May 2026 | Verhoef, Peter |

EPO FORM 1503 03.82 (P04C01)

## ANNEX TO THE EUROPEAN SEARCH REPORT
## ON EUROPEAN PATENT APPLICATION NO.

EP 25 22 5998

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2026

| Patent document cited in search report | Publication date | Patent family member(s) | Publication date |
|---|---|---|---|
| US 2018218369 A1 | 02-08-2018 | NONE | |
| US 2021233080 A1 | 29-07-2021 | NONE | |

EPO FORM P0459

For more details about this annex : see Official Journal of the European Patent Office, No. 12/82